# EUROPEAN PATENT APPLICATION

(11) **EP 0 813 039 A2**
(43) Date of publication of application: **17.12.1997**
(21) Application number: 97109172.3
(22) Date of filing: 06.06.1997
(51) Int. Cl.: G01B 5/012

(54) **A proportional three-dimensional feeler having resilient articulated quadrilaterals**

(30) Priority: 10.06.1996 IT TO960503
(71) Applicant: CONSIGLIO NAZIONALE DELLE RICERCHE, 00185 Roma (IT); Coord 3 - Costruzione di Macchine Utensili Speciali S.a.s. di Berri Michele E.C., 10050 Bruzolo (Torino) (IT)
(72) Inventor: Desogus, Sergio, 10024 Moncalieri (Torino) (IT); Rebaglia, Bruno Ippolito, 10121 Torino (IT); Berri, Luigi, 10098 Rivoli (Torino) (IT)
(74) Representative: Serra, Francesco

(57) **Abstract**

A proportional three-dimensional feeler having resilient articulated quadrilaterals (1) includes a fixed part (2) and a movable part constituted by movable elements (43A, 43B), small columns (11, 12, 13, 14), a small sphere (5), a stem (6), three resilient units (20, 30, 40) and a plate (10). The small sphere (5) is able to move along the three axes (x, y, z) without rotation, and its movements are detected by a photodiode (61) parallel to the (x-y) plane associated with a led (55) aligned with the axis (z), and a photodiode (62) parallel to the (x-z) plane associated with a led (56) aligned with the axis (y).

## Description

The present invention concerns a proportional three-dimensional feeler having resilient articulated quadrilaterals, in particular of the type usable as a measurement sensing element on a coordinate-measuring machine.

Feelers of this type are essentially constituted by a small sphere supported on a stem fixed to the coordinate-measuring machine. The coordinate-measuring machine positions the feeler in its measurement volume so as to bring the small sphere, located at the end of the stem attached to the movable part of the feeler, into contact with the surface of the object to be measured.

Feelers such as those described are able to move the small sphere of known diameter with respect to its rest position, that is, when it is not in contact with the surface of the object to be measured. This movement is in the form of three signals, for example electrical signals, which are proportional to the movement of the feeler along three orthogonal axes x, y and z.

The absolute position of the centre of the small sphere in the measurement volume of the coordinate-measuring machine is obtained by combining the displacement vector provided by the feeler with the position vector of the feeler, identified by reading the three orthogonal scales of the coordinate-measuring machine.

One of the inherent problems with measurements taken using feelers of the type described above is getting the tip or small sphere of the feeler to move exclusively along the three orthogonal axes x, y and z without rotation about these axes, rotation being considered an incorrect movement and which ought to be absolutely repeatable so as to be correctable by calibration, as otherwise it gives rise to incorrect readings.

The object of the present invention is to provide a feeler which enables measurements to be taken without rotation about the orthogonal axes x, y and z, and which is reliable and inexpensive.

The present invention achieves the aforesaid aims by virtue of a proportional three-dimensional feeler having the characteristics specifically referred to in the following claims.

Further characteristics and advantages of the present invention will become clear in the course of the following detailed description, given purely by way of non-limitative example, with reference to the accompanying drawings, in which:

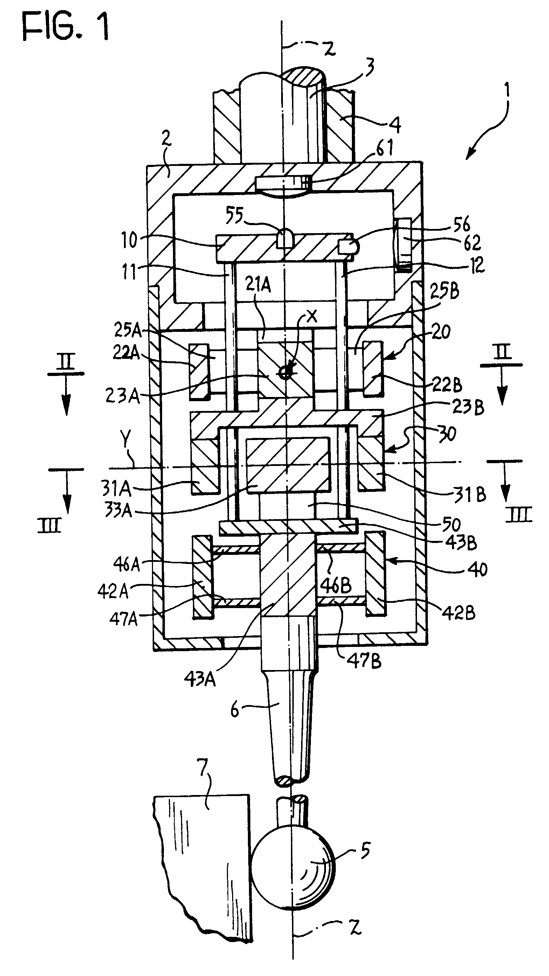

Figure 1 is a longitudinal section of a feeler according to the invention;
Figure 2 is a section taken on the line II-II of Figure 1;
Figure 3 is a section taken on the line III-III; and
Figure 4 is a perspective view of a detail of Figure 1.

With reference to the drawings, the reference number 1 generally indicates the feeler that is the subject of the present invention. The feeler 1 includes a fixed part comprising a casing 2 and a tang 3; the feeler 1 is rigidly connected by the tang 3 to the end part 4 of the arm (not shown) of a coordinate-measuring machine (also not shown).

The coordinate-measuring machine positions the feeler 1 in its measurement volume so as to bring a small sphere 5 located at the end of a stem 6 connected to the movable part (which will be better described below) of the feeler 1 into contact with the surface 7 of an object to be measured.

The feeler is able to provide the displacement the centre of the small sphere 5 of known diameter with respect to its rest position, that is the position it adopts when it is not in contact with the surface 7 of the object to be measured. This movement is provided in terms of three electrical signals which are proportional (as will be seen below) to the movement along the three orthogonal coordinate axes x, y and z, indicated in the drawings.

The absolute position of the centre of the small sphere 5 in the measurement volume of the coordinate-measuring machine is obtained by combining the displacement vector provided by the feeler 1 with the vector indicating the position of the feeler 1 located by reading the three orthogonal scales of the coordinate-measuring machine in a known way.

The movable part of the feeler 1 includes a stem 6 rigidly connected to a movable body 43A, which is in turn rigidly connected to an intermediate plate 43B which is rigidly connected to a third plate 10 by a plurality of small columns or cylinders (four in the embodiment illustrated), respectively 11, 12, 13, 14; the movable part is rigidly connected to the small sphere 5 by the stem 6.

The movable part of the feeler 1 is connected to its fixed part, constituted by the casing 2 to which the tang 3 is rigidly fixed, by three resilient units generally indicated 20, 30 and 40, one for each orthogonal axis of movement, respectively x, y and z. These resilient units allow the movable part of the feeler 1 to move along respective axes, while impeding its rotation.

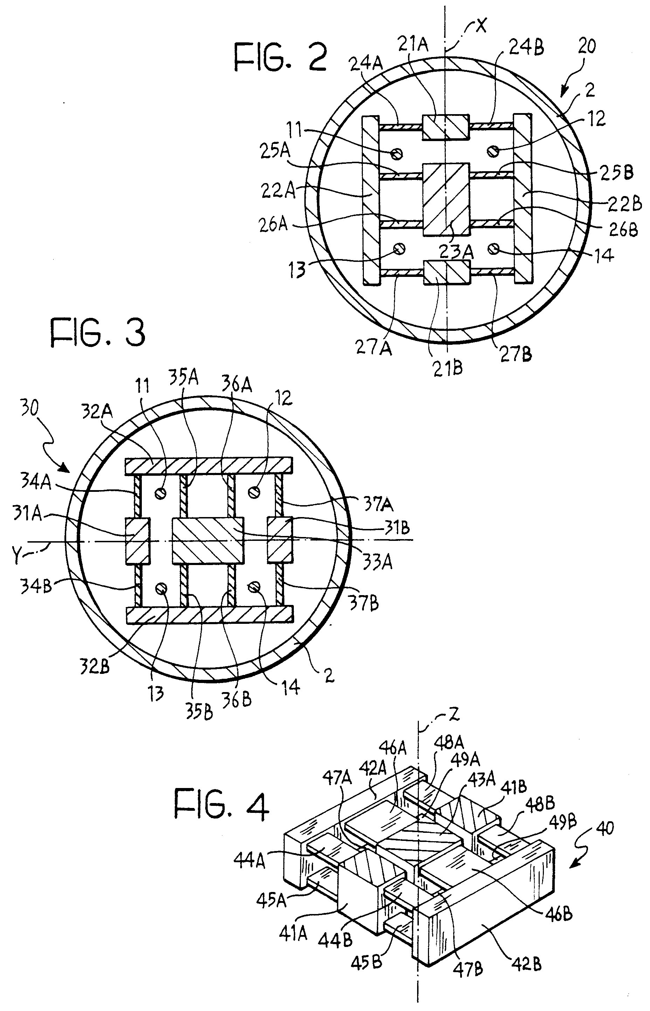

The resilient unit 20, which allows the only translation along the x-axis, is shown in Figure 2; this drawing shows two parallel transverse bodies 21A and 21B having the x-axis as their axis of symmetry, and being rigidly fixed to the casing 2 of the feeler 1. A movable body 23A is disposed between the two transverse bodies 21A and 21B.

A pair of intermediate elements 22A and 22B is disposed symmetrically about the x-axis. Resilient elements 24A, 24B, 27A and 27B connect the fixed bodies 21A and 21B to the intermediate elements 22A and 22B which are attached to the movable body 23A by resilient elements (for example, metal strips) 25A, 25B, 26A and 26B. All of the resilient elements are rigidly fixed at their ends and are sensitive only to shear stress. By virtue of the arrangement described above, the movable body 23A is only able to translate in the x direction with respect to the fixed elements 21A and 21B, without rotation.

The resilient unit 30 is identical to the resilient unit 20, but turned through 90° with respect thereto, and with respect to the z-axis. It includes a body 33A which can move with respect to two fixed elements 31A and 31B, rigidly connected to the casing 2 by a bracket 23B rigidly connected to the movable body 23A; a pair of intermediate elements 32A and 32B is disposed simmetrically about the y-axis . In this case also, the resilient connection elements 34A, 34B, 37A, 37B, 35A, 35B, 36A and 36B are rigidily fixed at their ends and are sensitive only to shear stress; in this way, the movable body 33A can only translate in the y direction, with respect to the fixed elements 31A and 31B.

The resilient unit 40, illustrated in Figure 4, allows the movable body 43A to move, along the z-axis only, with respect to the fixed elements 41A and 41B. The body 43A is connected by the resilient elements 46A, 46B, 47A and 47B to the intermediate elements 42A and 42B which, in turn, are attached to the fixed elements 41A and 41B by the resilient elements 44A, 44B, 45A, 45B, 48A, 48B, 49A and 49B. All of the resilient elements of the resilient unit 40 are flexible in the z direction but rigid against tension, compression and flexing in the x direction. A bracket connection element 50 joins the movable body 33 of the unit 30 to the fixed elements 41A and 41B of the unit 40.

In this case also, like the unit 20 with respect to the x-axis and the unit 30 with respect to the y-axis, these resilient elements are rigidly fixed at their ends. In this way, the body 43A can move in the z direction only, without rotation and with respect to the fixed elements 41A and 41B.

In summary, the movable body 43A is able to move with respect to the fixed part of the feeler 1 in the three directions x, y and z, without rotating about these axes.

Displacements of the body 43A, that is, of the movable part of the feeler, are detected in the upper part of the casing, specifically by the plate 10 which is rigidly connected to the body 43A by the four small columns 11, 12, 13, 14 and an intermediate plate 43B.

The movements of the plate 10 reproduce exactly the movements of the body 43A which reproduces those of the small sphere 5 of the feeler 1, forcing it however to move along the three axes x, y, z without any rotation. The plate 10 therefore moves in the space exactly like the small sphere 5 of the feeler 1.

Two leds are fixed to the plate 10, a first led 55 which is aligned with the z-axis, and a second led 56 which is aligned with the y-axis. Displacement transducers in the form of two four-quadrant photodiodes 61, 62 are fixed firmly and rigidly to the casing 2.

The photodiode 61 facing the led 55 is parallel to the x-y plane, while the photodiode 62 facing the led 56 is parallel to the x-z plane. The photodiodes 61, 62 are sensitive to movement in the plane with respect to which they are parallel, but not to movement perpendicular to their respective planes.

The photodiode 61 is able to detect the movements of the led 55 and therefore of the plate 10 in the x and y directions, while the photodiode 62 is able to detect the movements of the led 56 and therefore of the plate 10 in the z direction.

In another embodiment, not illustrated, the plate 10 with its associated leds 55, 56, the associated photodiodes 61, 62 and the small columns 11, 12, 13, 14 are omitted, the fixed elements of the resilient units 20, 30, 40 being provided with a light-emitting source associated with photodiodes attached to the movable bodies of each resilient unit 20, 30, 40, axially aligned with and orthogonal to the movement to be measured.

In some cases, due to the demands of mounting and/or space, the light-emitting source and the associated photodiode may be slightly separated.

Naturally, the principle of the invention remaining the same, the details of manufacture and the embodiments may be widely varied with respect to that described and illustrated without by this departing from the ambit of protection of the present invention.

For example, the four-quadrant photodiodes may be replaced with photodiodes having a lateral effect or the like, or the resilient elements may be formed by coupling composite elements, or by working from a single piece.

## Claims

1. A proportional three-dimensional feeler including a fixed part (2) and a movable part comprising a small sphere (5) rigidly connected to a stem (6) connected to a movable body (43A) fixed to an intermediate plate (43B) connected to a plate (10), characterised in that the intermediate plate (43B) is connected to the plate (10) by a plurality of small columns (11, 12, 13, 14), and in that the movable part (5, 6, 43A, 43B, 10, 11, 12, 13, 14) is connected to the fixed part (2) by three resilient units (20, 30, 40), respectively movable in the orthogonal axes of movement (x, y, z).

2. A feeler according to Claim 1, characterised in that the said resilient units (20, 30, 40) allow the movable body (43A), the intermediate plate (43B) and the plate (10) to move along a respective one of the three axes of movement (x, y, z) only, without rotation about these axes.

3. A feeler according to Claim 2, characterised in that the said resilient units (20, 30, 40) include a movable body (23A, 33A, 43A), a pair of fixed elements (21A, 21B; 31A, 31B; 41A, 41B) joined to the casing (2), and a pair of intermediate elements (22A, 22B; 32A, 32B; 42A, 42B).

4. A feeler according to Claim 3, characterised in that the said movable bodies (23A, 33A, 43A) are connected to the intermediate elements (22A, 22B; 32A, 32B; 42A, 42B) by resilient elements (25A, 25B; 26A, 26B; 35A, 35B; 36A, 36B; 46A, 46B; 47A, 47B).

5. A feeler according to Claim 4, characterised in that the said fixed elements (21A, 21B; 31A, 31B; 41A, 41B) are connected to the said intermediate elements (22A, 22B; 32A, 32B; 42A, 42B) by the resilient elements (24A, 24B; 27A, 27B; 34A, 34B; 37A, 37B; 44A, 44B; 45A, 45B; 48A, 48B; 49A, 49B).

6. A feeler according to any preceding claim, characterised in that a led (55) aligned with the axis (z) and a led (56) aligned with the axis (y) are fixed to the plate (10).

7. A feeler according to any preceding claim, characterised in that displacement-sensitive transducers (61, 62) associated with the said leds (55, 56) are joined to the casing (2).

8. A feeler according to any preceding claim, characterised in that the said transducers are photodiodes having four quadrants (61, 62).

9. A feeler according to any preceding claim, characterised in that the photodiode (61) facing the led (55) is parallel to the (x-y) plane, and the photodiode (62) facing the led (56) is parallel to the (x-z) plane.

10. A feeler according any preceding claim, characterised in that the resilient units (20, 30, 40) are realised by the coupling of composite elements.

11. A feeler according to any of Claims 1 to 10, characterised in that the resilient units (20, 30, 40) are formed by working from a single piece.

All substantially and described and illustrated and for the specified aims.
